# EUROPEAN PATENT APPLICATION

(11) **EP 4 748 647 A1**
(43) Date of publication of application: **27.05.2026**
(21) Application number: 24472018.1
(22) Date of filing: 21.11.2024
(51) Int. Cl.: B60Q 1/14, B60R 16/027

(54) **DETACHABLE VEHICLE STALK AND SIGNAL SYSTEM WITH SUCH A DETACHABLE VEHICLE STALK**

(71) Applicant: Enhance Ltd, 1113 Sofia (BG)
(72) Inventor: Andreev, Dimitar Andreev, 1113 Sofia (BG)
(74) Representative: Benatov, Samuil Gabriel

(57) **Abstract**

The stalk (A) according to the invention is configured for wireless connection to a body control module (C) of a vehicle via a Command interface (B). Such signal system can activate different functions of the vehicle. The stalk (A) has a mounting surface, by which can be mounted non-invasively to a steering column of the vehicle, and as such can be used as an accessory for the vehicle.

## Description

### TECHNICAL FIELD

Present invention relates to the automobile industry, more particularly to multifunctional stalks for automotive vehicles.

### BACKGROUND OF THE INVENTION

A vehicle stalk (also known as a steering column stalk, or indicator stalk, or turn signal lever or turn signal controlling device) is used to control various functions and is typically within easy reach of the driver's hands. Most vehicles have one or two stalks, located on either side of the steering wheel. Common functions of a vehicle stalk are activating and deactivating turn signals, high beams, headlights, windshield wipers, cruise control, headlight flash, horn, lane keeping assist and driver assistance features. Typically, stalks are made of plastic with some internal metal components for durability and electrical connectivity. The length and design can vary based on the vehicle's interior. They are usually ergonomic, making it easy to operate without looking away from the road. In vehicles, many functions have been integrated into the stalks to reduce dashboard clutter and provide a convenient, intuitive interface for the driver. The structure of a vehicle stalk is designed to be both ergonomic and functional, consisting of several key components: a lever connected in one end to a housing via a pivot joint which can rotate up and down and/or forward and backward, toward an initial position of the lever. In the known stalk designs a piston is arranged in a cavity in a neck of the pivot joint, and the piston is connected to a spring element. In a position of the lever, different from its initial position, the piston is spring loaded by the spring element in a cavity of a locker, which constantly provides back pressure to the piston until the lever is returned in its initial position. The stalk also comprises a cam mechanism, used for turn signals, which interacts with the steering wheel movement to automatically cancel the turn signal once the turn is completed. An elongated part of the neck is connected to different electrical switches of a main printed circuit board in up, down, forward, or backward position of the lever, and thus activates one of said electrical switches, which provide signal by wire to a body control module of the vehicle, which triggers the actuation of a respective function. The stalk is attached via a mounting bracket to the steering column. Said stalk is useful for standard vehicles, but does not provide possibility to be removed in case the vehicle has other function activating means, which a user prefers to use.

In some modern vehicles, including integrated in the vehicle function activating means instead of a stalk, the activation of a function, such as wipers or turn signal is made by accessing the function from a display of the vehicle, connected to the body control module. This is made because some vehicle manufacturers choose Design over Function and tend to lower the importance of the seamless and less distracting interaction with the car, for example changing how to control some essential functions that people are used to for ages, like activating turn signals or windshield wipers. The new methods often require several steps to execute the action and steal the driver's attention from the road to the touchscreen display. This is very dangerous, as in order to control different features of the car while driving, the driver's attention is not targeted to the road and conditions on the road, but to the display of the car. Such distraction may cause traffic collisions.

Additionally, some drivers are used to the levers, and prefer not to adapt to new different ways of activating vehicle's functions.

### SUMMARY OF THE INVENTION

Safety is most important when it comes to vehicles and the way people interact with them. Controlling different features of the car while driving without distracting the driver's attention to the road is crucial for safe drives.

Therefore, the invention applies to all vehicles lacking a dedicated stalk. It aims to provide easy access for the user to control different functions like the turn signals while at the same time being easy to install and set up in the car with a non-destructive method, thus allowing in case a user changes their mind, to remove the stalk, and use the standard integrated in the vehicle's display control.

The task of the invention is solved by creating a detachable vehicle stalk, comprising a lever connected in one end to a housing via a pivot joint configured to rotate up and down and/or forward and backward, toward an initial position of the lever. A piston is arranged in a cavity in a neck of the pivot joint, and the piston is connected to a spring element. In a position of the lever, different from its initial position, the piston is spring loaded by the spring element in a cavity of a locker. An elongated part of the neck is configured for connection to and actuation of different electrical switches of a main printed circuit board in up, down, forward, or backward position of the lever. The main printed circuit board has a microcontroller for wireless communication. On the side of the housing opposite to the side to which the lever is attached, the housing has a mounting surface with mounting means. The housing has a battery holder, accessible through a cover on a side of the housing different from the mounting surface, wherein in the battery holder there are battery connectors, connected to the main printed circuit board, by which the battery holder is configured to provide power to the main printed circuit board.

In a preferred embodiment of the invention, a secondary printed circuit board is located in the housing, which is connected by at least one pin header connector to the main printed circuit board, and the elongated part of the neck is further configured for connection to and actuation of different electrical switches of the secondary printed circuit board in the positions of the lever, different from its initial position, in which the lever is not configured for connection to and actuation of different electrical switches of the main printed circuit board.

In a preferred embodiment of the invention, the mounting means is double-sided adhesive tape.

Preferably, the double-sided adhesive tape is configured to withstand temperatures in the ratio -30/+100 degrees Celsius.

In a preferred embodiment of the invention, the microcontroller for wireless communication is configured for Bluetooth connection.

In a preferred embodiment of the invention, the lever has in its free end a push button with a mechanical switch with at least one level of pressure detection, connected by wire to an electrical circuit, comprised in the main printed circuit board located in the housing.

In a preferred embodiment of the invention, the lever has a rotary switch, configured with ability to be rotated between an initial position and at least one contact position, connected by wire to at least one electrical circuit, comprised in the main printed circuit board located in the housing.

In a preferred embodiment of the invention, the housing has an access cover fastened by screws to the housing, to which the mounting means is fixed.

According to the invention, a signal system is also created, which system comprises a detachable vehicle stalk according to the invention, connected to a body control module of the vehicle for actuating specific functions of the vehicle. The vehicle stalk is detachably attached with its mounting surface by the mounting means to the steering column of the vehicle, and is wirelessly connected via a Command interface to the body control module of the vehicle. The Command interface is configured to be controlled from an external control device or from a controller of the vehicle, and the Command interface is configured to set the type of actuated with the electrical switches function of the vehicle in up, down, forward, and backward position of the lever of the stalk, and to visualize the set functions on a screen in the vehicle or on a screen of an external device.

In a preferred embodiment of the invention, the Command interface is configured to set the type of actuated with the electrical switches function of the vehicle on rotation of the rotary switch, or on pressing the push button of the lever of the stalk.

In a preferred embodiment of the invention, the vehicle stalk is wirelessly connected to the Command interface, which is attached directly or indirectly by wire to a diagnostic socket of the vehicle, to which wiring harness for CAN Bus communication to the body control module of the vehicles is connected.

In alternative embodiment of the invention, the Command interface is integrated in the housing of the stalk, and connected by wires to the main printed circuit board, and wirelessly connected by Bluetooth connection from the microcontroller for wireless communication of the stalk to a Bluetooth receiver connected to the body control module of the vehicle or to an external to the vehicle Bluetooth receiver installed in a diagnostic socket of the vehicle.

In a preferred embodiment of the invention, the Command interface is configured to actuate different functions of the vehicle depending on the vehicle's current gear.

In a preferred embodiment of the invention, said actuated from the stalk function of the vehicle is chosen from the following functions: turn signal, lane change signal, headlight, high beams, fog lights, windshield wipers, wiper speed control, windshield washer spray, rear wiper and washer control, headlight flashing, cruise control, driver assistance features, audio and phone controls, trip computer and dashboard navigation, rain sensor and automatic headlights activation, rear fog light control, lane change assist, opening the trunk, opening a passenger door, unlocking a charging port, change of function mode in-between the other possible to be controlled from the stalk functions of the vehicle which are set in the Command interface.

This invention relates to the functional combination and usage of different methods for interaction with a modern vehicle and activation of different functions in a safe and non-distracting manner via a stalk, which can be connected non-invasively to the steering column of the vehicle. The additional attachment of the stalk to the steering column, allows it to be used as an accessory for the vehicle.

### BRIEF DESCRIPTION OF THE FIGURES

Further in the description, the stalk and the signal system with such stalk, which are the objects of the invention, are explained with preferred embodiments, given as a non-limiting the scope of the invention example, with reference to the attached figures, where:
Figure 1 is a side view of the stalk with cross section of the housing, showing the elements located in it, according to a preferred embodiment of the invention.
Figure 2 is a side view of the stalk with visible mounting surface, according to the preferred embodiment of the invention shown on figure 1.
Figure 3 is a side view of the stalk with visible battery holder, according to the preferred embodiment of the invention shown on figures 1 and 2.
Figure 4 is a block scheme of the signal system according to a preferred embodiment of the invention.

### EXAMPLARY EMBODIMENTS AND OPERATION OF THE INVENTION

The terms "up", "down", "top", "forward", "backward" in this specification and in the claims refer to the relative arrangement of the structural elements as shown in the figures and in the usual operating position of the device.

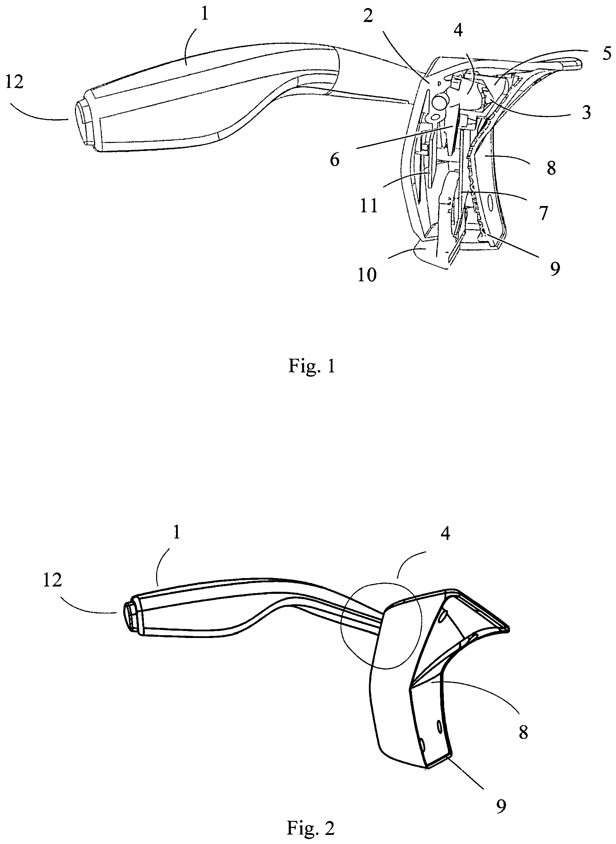

The detachable vehicle stalk, according to a preferred embodiment of the invention, as shown on figures 1-3, comprises a lever 1 connected in one end to a housing 2 via a pivot joint through which the lever 1 rotates up and down, and forward and backward, toward an initial position of the lever 1. In alternative embodiments of the invention, the lever 1 can be configured to be rotated only in up/down direction, or in forward/backward direction toward an initial position of the lever 1. The pivot joint is secured using screws, clips, or pins, ensuring the lever 1 stays attached to the housing 2 while allowing it to move freely.

A piston 3, a neck 4 of the pivot joint, an elongated part 6 of the neck 4, a locker 5, a main printed circuit board 7 and a secondary printed circuit board 11 are located in the housing 2, as shown on figure 1.

Common materials from which the elements of the stalk A can be made are:
- The lever 1 and the housing 2 are usually made of durable plastic (such as ABS, nylon, or polycarbonate) or a composite material for lightweight yet sturdy construction. The lever 1 may have a rubberized grip for better handling;
- Mounting brackets if exist in the construction of the stalk are made of metal or reinforced plastic;
- The piston 3, the neck 4 of the pivot joint, the elongated part 6 of the neck 4, and the locker 5 can be made of metal or reinforced plastic.

The piston 3 is arranged in a cavity in the neck 4 of the pivot joint, and the piston 3 is connected to a spring element (not shown on the figures), wherein in a position of the lever 1, different from its initial position, the piston 3 slides inside the stalk housing 2, pressing against a switch or contact plate of the main printed circuit board 7 and optionally the secondary printed circuit board 11, the spring element gets compressed or twisted in a cavity of a locker 5, so the piston 3 is spring loaded by the spring element in said cavity of a locker 5, thus creating pressure to the piston 3, and once the lever 1 is released from a user, the spring tension helps return the lever 1 to its initial position, and opens the circuit. Thus, a signal from the lever is created to be transmitted via a Command interface B to the body control module C of the vehicle, comprising the electronic control unit (ECU) of the vehicle, and the lever 1 is returned in its initial position waiting to be activated for another signal for activation of some function of the vehicle. The neck 4 acts as a hinge, allowing the lever 1 to rotate up and down, or back and forth. The neck 4 serves as the main axis around which the lever 1 moves. The elongated part 6 of the neck 4 is made with the ability to be connected to different electrical switches of the main printed circuit board 7 in up, down, forward, or backward position of the lever 1. When such connection is established a signal from the connected electrical switch of the main printed circuit board 7 is transmitted to the vehicle, which actuates specific function, connected to said electrical switch.

The stalk according to the invention, can include a push button in the free end of the lever, having a mechanical switch with one or more levels of pressure detection, connected by wire to an electrical circuit, comprised in the main printed circuit board located in the housing. Thus, for example, if the push button has two levels of pressure detection, the first level of pressure detection can activate wipers, and the second level of pressure detection can activate windshield washer spray.

The stalk according to the invention, can include a rotary switch located on the lever, which can be rotated between an initial position and at least one contact position. The rotary switch is connected by wire to at least one electrical circuit, comprised in the main printed circuit board located in the housing. Thus, for example, the volume of music can be controlled, as each contact position increases or decreases with one level said volume.

The transmittance of the signal from the stalk A to the body control module C of the vehicle is achieved by wireless communication, such as Bluetooth connection or WIFI connection, from a microcontroller of the main printed circuit board 7.

The invention can be made with only a main printed circuit board 7, or with both a main printed circuit board 7 and a secondary printed circuit board 11. The main printed circuit board 7 serves as the central hub for processing signals from the stalk's movements and any buttons or rotary switches. The main printed circuit board 7 acts as the primary control unit, managing complex functions like for example signal timing, wiper speed control, and integrating inputs from various sensors (e.g., rain sensors for automatic wipers). The secondary printed circuit board 11 usually handles specific controls related to the stalk A, such as rotary switches (for example for wiper speed), push buttons (for high beams, cruise control, or voice activation), and additional functions like lane-keeping assist or adaptive cruise control. The secondary printed circuit board 11 simplifies wiring by handling local controls and sending signals to the main printed circuit board 7 as a bundled input, reducing the need for multiple direct connections. So, the secondary printed circuit board 11 may serve as an intermediary board that transmits specific button presses or rotary dial adjustments to the main printed circuit board. The secondary printed circuit board 11 is connected by at least one pin header connector to the main printed circuit board 7, and the elongated part 6 of the neck 4 is further configured for connection to and actuation of different electrical switches of the secondary printed circuit board 11 in the positions of the lever 1, different from its initial position, in which the lever 1 is not configured for connection to and actuation of different electrical switches of the main printed circuit board 7.

The stalk can also comprise a push button 12 in the free end of the lever 1. Said push button 12 has one or more levels of pressure detection and is connected via small mechanical switches (tactile switches) of each level of pressure detection, and when pressed, complete an electrical circuit. The wiring for this button 12 runs through the stalk A and connects to the main printed circuit board 7. Each level of pressure detection can be related to different function, for example headlight flashing, cruise control activation, or windshield washer spray.

The stalk can also comprise a rotary switch (not shown on the figures) mounted to the lever, which can be rotated between an initial position and at least one contact position. The rotary switch consists of a dial connected to a rotating contact plate. When the dial is turned, the contact plate moves, reaching to one of the contact positions and closing different circuits in the main printed circuit board 7 to control various functions Accordingly, if the rotary switch has two contact positions, each of them will be connected to different electrical circuit, activating different level of a specific function, for example speed or windshield wipers, or headlight modes, or volume of music.

The stalk A may have additional buttons or small rocker switches (not shown on the figures) integrated for additional functions like volume control, lane-keeping assist, or voice commands.

The stalk A may have feedback features (not shown on the figures) like clicks, detents, or even small LED indicators that provide tactile or visual feedback to the driver, indicating that a function has been successfully activated.

It is also possible the stalk A to be constructed with a locker 5 having a latch mechanism inside the housing that holds the stalk A in place when activated (Fig. 1). Such locker 5 consists of a small detent (notch) and spring-loaded pin or ratchet that clicks into place when the stalk is moved, providing a tactile feel and holding the position securely. For instance, when a user pushes the stalk A up or down for turn signals, the locker 5 engages and locks the stalk into position. This is why the turn signal remains on without holding it. When the steering wheel returns to its initial position after a turn, a cam mechanism in the housing 2 pushes against the locker 5, releasing the latch and allowing the stalk A to return to its initial position automatically. In embodiments of the invention without cam mechanism and with a locker 5 without latch mechanism, the stalk A only activates a function after moving in some direction, and immediately goes back to its initial position, and the body control module C of the vehicle controls when the function to stop, for example when a turn is completed, the body control module C of the vehicle detects it and deactivates the turn signal.

The stalk A can have symbols or labels indicating their functions, such as a light bulb icon for headlights or a windshield icon for wipers.

The length and design of the lever 1 can vary based on the vehicle's interior. They are usually ergonomic, making it easy to operate without looking away from the road. The lever is often elongated and ergonomically shaped to fit comfortably in the driver's hand. It may include textured surfaces or grooves for better grip.

The housing 2 can be made with an access cover 9 fastened by screws to the housing 2, to which the mounting means 6 is fixed. Thus, in case of malfunction, the stalk A can be opened and repaired.

The stalk A can be mounted both on the right or the left side of the steering column, and, also, there might be two stalks A on each side of the steering column, activating different functions.

On the side of the housing 2 opposite to the side to which the lever 1 is attached, the housing 2 has a mounting surface with mounting means 8 for attaching to the steering column of the vehicle, as shown on figures 1 and 2. The mounting surface with the mounting means 8 ensures that the stalk A is properly aligned with the steering column and does not move when the lever a is operated. Said mounting means 8 can be double-sided adhesive tape, preferably with ability to withstand temperatures in the ratio -30/+100 degrees Celsius, thus keeping the stalk fixed to the steering column in all weather conditions and in all geographic locations. Alternatively, the mounting means 8 can be a bracket, fixed to the mounting surface of the stalk A by adhesive layer or by fastening means, known from the state of the art, such as screws, wherein the steering column has an adapter for attaching to said bracket. Also, the standard cover of the steering column can be made replaceable with new cover of steering column with integrated adapter for bracket of stalk A.

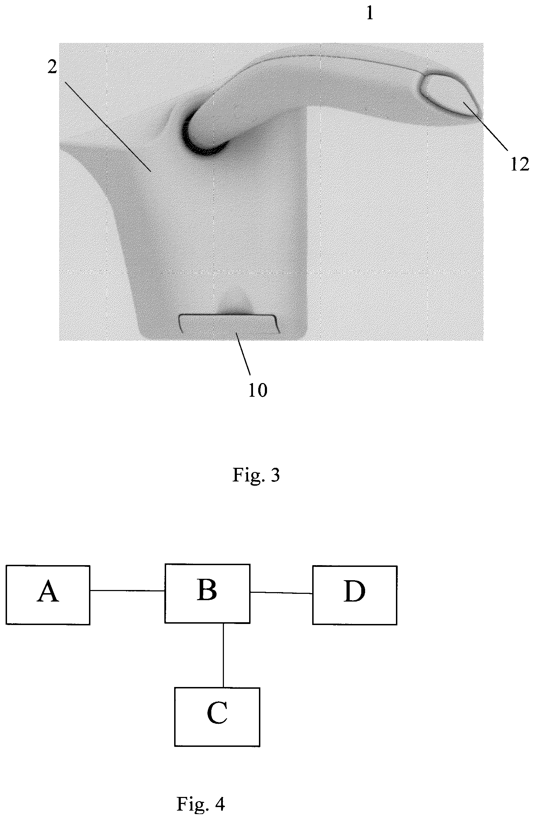

The housing 2 has a battery holder 10, shown on figures 1 and 3, accessible through a cover on a side of the housing 2 different from the mounting surface, wherein in the battery holder 10 there are battery connectors, connected to the main printed circuit board 7. Thus, by using power from batteries, the stalk A can operate.

After actuation from the stalk A of signal from the main printed circuit board 7, which is transmitted via the Command interface B to the body control module C of the vehicle, comprising the electronic control unit (ECU) of the vehicle, the desired function of the vehicle is activated. This process forms a signal system, as shown on figure 4. The connection via the Command interface B is wireless, and can be configured in several alternative ways:
- the wireless connection can be between the stalk A and the Command interface B which are two separate devices, wherein the Command interface B is attached directly or indirectly by wire to a diagnostic socket of the vehicle, to which wiring harness for CAN Bus communication to the body control module C of the vehicles is connected;
- the Command interface B can be integrated in the housing 2 of the stalk A, and connected by wires to the main printed circuit board 7, and wirelessly connected by Bluetooth connection from the microcontroller for wireless communication of the stalk A to a Bluetooth receiver connected to the body control module C of the vehicle or to an external to the vehicle Bluetooth receiver installed in a diagnostic socket of the vehicle, such as an OBD scanning port.
- the Command interface B can be connected wirelessly to the stalk A, and wirelessly to body control module C of the vehicle, in which case the Command interface B has a slot for battery power.

In wireless connection between the stalk A and the Command interface B, the connection is based preferably on a proprietary encrypted interface over Bluetooth. Once both devices are paired together with the help of a mobile app, when the stalk A sends information to the Command interface B for the position it's pressed - for example Up or Down - or when, for example, the push button is pressed, the Command interface B decides what command to send to the body control module C of the vehicle for activating a function based on the mode it is set.

The Command interface B is configured to set the type of actuated with the electrical switches function of the vehicle in up, down, forward, and backward position of the lever 1, or other switches and buttons of the stalk A.

The setting is made from a user, as the Command interface B can be controlled from an external control device D or from a controller of the vehicle, meaning that a user when operating with such external control device D or with such controller of the vehicle, can configure the Command interface B.

The set functions are visualized on a screen in the vehicle and/or on a screen of the external device D.

The Command interface B can be configured to actuate different functions of the vehicle depending on the vehicle's current gear. For example, the same button can control the rear wiper in reverse gear, and the front windshield wipers in direct gear of automatic transmissions.

Examples of the actuated from the stalk A functions of the vehicle are: turn signal, lane change signal, headlight, high beams, fog lights, windshield wipers, wiper speed control, windshield washer spray, rear wiper and washer control, headlight flashing, cruise control, driver assistance features, audio and phone controls, trip computer and dashboard navigation, rain sensor and automatic headlights activation, rear fog light control, lane change assist, opening the trunk, audio and phone controls, opening a passenger door, unlocking a charging port, change of function mode in-between the other possible to be controlled from the stalk functions of the vehicle which are set in the Command interface B, or any other known function that the vehicle may be built in with.

It will be clear to those skilled in the art that various modifications of the stalk and the signal system with such stalk are possible, which are also within the scope of the invention as defined in the appended claims. All parts of the stalk and the signal system can be replaced with technically equivalent elements.

The reference numbers of the technical features are included in the claims solely for the purpose of increasing the comprehensibility of the claims and, therefore, these reference numbers do not have any limiting effect on the interpretation of the elements indicated by these reference numbers.

## Claims

1. A detachable vehicle stalk, comprising a lever (1) connected in one end to a housing (2) via a pivot joint configured to rotate up and down, and/or forward and backward, toward an initial position of the lever (1), wherein a piston (3) is arranged in a cavity in a neck (4) of the pivot joint, and the piston (3) is connected to a spring element, wherein in a position of the lever (1), different from its initial position, the piston (3) is spring loaded by the spring element in a cavity of a locker (5), wherein an elongated part (6) of the neck (4) is configured for connection to and actuation of different electrical switches of a main printed circuit board (7) in up, down, forward, or backward position of the lever (1), **characterized in that** the main printed circuit board (7) has a microcontroller for wireless communication, wherein on the side of the housing (2) opposite to the side to which the lever (1) is attached, the housing (2) has a mounting surface with mounting means (8), wherein the housing (2) has a battery holder (10), accessible through a cover on a side of the housing (2) different from the mounting surface, wherein the battery holder (10) is configured to provide power to the main printed circuit board (7).

2. A detachable vehicle stalk according to claim 1, **characterized in that** a secondary printed circuit board (11) is located in the housing (2), which is connected by at least one pin header connector to the main printed circuit board (7), and the elongated part (6) of the neck (4) is further configured for connection to and actuation of different electrical switches of the secondary printed circuit board (11) in the positions of the lever (1), different from its initial position, in which the lever (1) is not configured for connection to and actuation of electrical switches of the main printed circuit board (7).

3. A detachable vehicle stalk according to any of the previous claims, **characterized in that** the mounting means (6) is double-sided adhesive tape.

4. A detachable vehicle stalk according to claim 3, **characterized in that** the double-sided adhesive tape is configured to withstand temperatures in the ratio -30/+100 degrees Celsius.

5. A detachable vehicle stalk according to any of the previous claims, **characterized in that** the microcontroller for wireless communication is configured for Bluetooth connection.

6. A detachable vehicle stalk according to any of the previous claims, **characterized in that** the lever (1) has in its free end a push button (12) with a mechanical switch with at least one level of pressure detection, connected by wire to an electrical circuit, comprised in the main printed circuit board (7) located in the housing (2).

7. A detachable vehicle stalk according to any of the previous claims, **characterized in that** the lever has a rotary switch, configured with ability to be rotated between an initial position and at least one contact position, connected by wire to at least one electrical circuit, comprised in the main printed circuit board (7) located in the housing (2).

8. A detachable vehicle stalk according to any of the previous claims, **characterized in that** the housing (2) has an access cover (9) fastened by screws to the housing (2), to which the mounting means (8) is fixed.

9. A signal system comprising a detachable vehicle stalk (A), attached to a steering column of a vehicle, and connected to a body control module (C) of the vehicle for actuating specific functions of the vehicle, **characterized in that** the detachable vehicle stalk (A) is according to any of claims 1-8 and is detachably attached with its mounting surface by the mounting means (8) to the steering column of the vehicle, and is wirelessly connected via a Command interface (B) to the body control module (C) of the vehicle, wherein the Command interface (B) is configured to be controlled from an external control device (D) or from a controller of the vehicle, and the Command interface (B) is configured to set the type of actuated with the electrical switches function of the vehicle in up, down, forward and backward position of the lever (1) of the stalk (A), and to visualize the set functions on a screen in the vehicle or on a screen of external device (D).

10. A signal system according to claim 9, **characterized in that** the Command interface (B) is configured to set the type of actuated with the electrical switches function of the vehicle after rotation of the rotary switch as described in claim 7, or after pressing the push button (12) of the lever (1) of the stalk (A), as described in claim 6.

11. A signal system according to claims 9 and 10, **characterized in that** the vehicle stalk (A) is wirelessly connected to the Command interface (B), which is attached directly or indirectly by wire to a diagnostic socket of the vehicle, to which wiring harness for CAN Bus communication to the body control module (C) of the vehicles is connected.

12. A signal system according to claim 10, **characterized in that** the Command interface (B) is integrated in the housing (2) of the stalk (A), and connected by wires to the main printed circuit board (7), and wirelessly by Bluetooth connection from the microcontroller for wireless communication of the stalk (A) to a Bluetooth receiver connected to the body control module (C) of the vehicle or to an external to the vehicle Bluetooth receiver installed in a diagnostic socket of the vehicle.

13. A signal system according to any of claims 9-12, **characterized in that** the Command interface (B) is configured to actuate different functions of the vehicle depending on the vehicle's current gear.

14. A signal system according to any of claims 9-13, **characterized in that** said actuated from the stalk (A) function of the vehicle is chosen from the following functions: turn signal, lane change signal, headlight, high beams, fog lights, windshield wipers, wiper speed control, windshield washer spray, rear wiper and washer control, headlight flashing, cruise control, driver assistance features, audio and phone controls, trip computer and dashboard navigation, rain sensor and automatic headlights activation, rear fog light control, lane change assist, opening the trunk, opening a passenger door, unlocking a charging port, change of function mode in-between the other possible to be controlled from the stalk functions of the vehicle which are set in the Command interface (B).
